# EUROPEAN PATENT APPLICATION

(11) **EP 3 680 613 A1**
(43) Date of publication of application: **15.07.2020**
(21) Application number: 18865961.9
(22) Date of filing: 25.07.2018
(51) Int. Cl.: G01C 19/58

(54) **GYROSCOPE BASED ON MACH-ZEHNDER-TYPE ATOMIC INTERFERENCE**

(30) Priority: 10.10.2017 JP 2017196985
(71) Applicant: Tokyo Institute of Technology, Tokyo 152-8550 (JP); Osaka University, Suita-shi, Osaka 565-0871 (JP); Japan Aviation Electronics Industry, Limited, Shibuya-ku Tokyo 1500043 (JP); Mitsubishi Heavy Industries, Ltd., Chiyoda-ku, Tokyo 1008332 (JP)
(72) Inventor: KOZUMA, Mikio, Tokyo 152-8550 (JP); INOUE, Ryotaro, Tokyo 152-8550 (JP); MUKAIYAMA, Takashi, Suita-shi, Osaka 565-0871 (JP); MORIMOTO, Seiichi, Tokyo 150-0043 (JP); YOSHIOKA, Kazunori, Tokyo 150-0043 (JP); TANAKA, Atsushi, Tokyo 150-0043 (JP); KAMINO, Yuichiro, Minato-ku, Tokyo 108-8215 (JP)
(74) Representative: MERH-IP Matias Erny Reichl Hoffmann Patentanwälte PartG mbB
(86) International application number: PCT/JP2018/027825
(87) International publication number: WO 2019/073655

(57) **Abstract**

A gyroscope of the present invention includes a moving standing light wave generator 301 to generate three moving standing light waves 201a, 201b and 201c, an atomic beam source 101 to continuously generate an atomic beam 101a in which individual atoms are in the same state, an interference device 201 that exerts a Sagnac effect through interaction between the atomic beam 101a and the three moving standing light waves 201a, 201b and 201c, and a monitor 400 to detect angular velocity or acceleration by monitoring an atomic beam 101b from the interference device 201. The atoms are alkaline earth metal atoms, alkaline earth-like metal atoms, stable isotopes of alkaline earth metal atoms or stable isotopes of alkaline earth-like metal atoms.

## Description

### TECHNICAL FIELD

The present invention relates to a Mach-Zehnder type atomic interferometric gyroscope.

### BACKGROUND ART

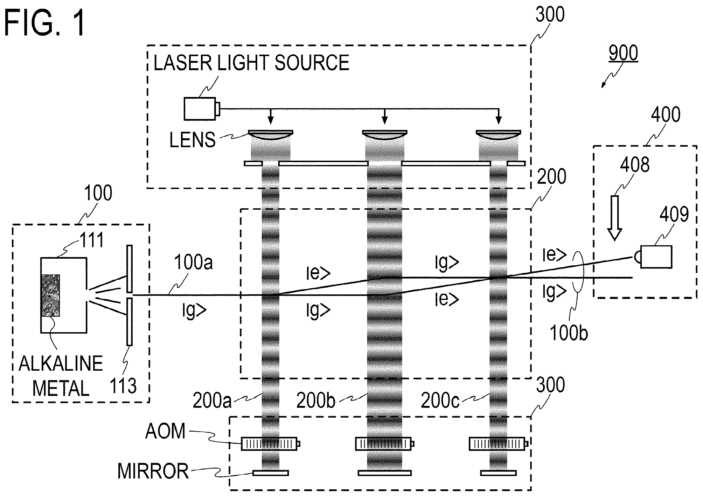

In recent years, with the advancement of laser technology, research on atom interferometers, gravity accelerometers using atomic interference, gyroscopes or the like is progressing. As one of atom interferometers, a Mach-Zehnder type atom interferometer is known. A conventional Mach-Zehnder type atom interferometer 900 shown in Fig. 1 includes an atomic beam source 100, an interference device 200, a moving standing light wave generator 300, and a monitor 400.

The atomic beam source 100 generates an atomic beam 100a. Examples of the atomic beam 100a include a thermal atomic beam, a cold atomic beam (atomic beam having a speed lower than the thermal atomic beam), a Bose-Einstein Condensate or the like. The thermal atomic beam is generated, for example, by heating a high-purity element in an oven. The cold atomic beam is generated, for example, by laser-cooling the thermal atomic beam. The Bose-Einstein Condensate is generated by cooling Bose particles to near absolute zero temperature. Individual atoms included in the atomic beam 100a are set to the same energy level (e.g., |g> which will be described later) by optical pumping.

In the interference device 200, the atomic beam 100a passes through three moving standing light waves 200a, 200b and 200c. Note that the moving standing light waves are generated by counter-propagating laser beams with different frequencies, and drift at a speed sufficiently lower than the speed of light. Atom interferometers use transition between two atom levels by light irradiation. Therefore, from the standpoint of avoiding de-coherence caused by spontaneous emission, transition between two levels having a long lifetime is generally used. For example, when the atomic beam is an alkaline metal atomic beam, induced Raman transition between two levels included in a hyperfine structure in a ground state is used. In the hyperfine structure, a lowest energy level is assumed to be |g> and an energy level higher than |g> is assumed to be |e>. Induced Raman transition between two levels is generally implemented using moving standing light waves formed by facing irradiation with two laser beams, a difference frequency of which is approximately equal to a resonance frequency of |g> and |e>. An optical configuration of the moving standing light wave generator 300 to generate three moving standing light waves 200a, 200b and 200c is publicly known and is irrelevant to main points of the present invention, and so description thereof is omitted (laser light source, lens, mirror, acoustic optical modulator (AOM (Acousto-Optic Modulator)) or the like are illustrated as an overview in Fig. 1). Hereinafter, atomic interference using a two-photon Raman process caused by the moving standing light waves will be described.

In the course of the atomic beam 100a from the atomic beam source 100 passing through the first moving standing light wave 200a, the state of individual atoms whose initial state is |g> changes to a superposition state of |g> and |e>. By setting appropriately, for example, a transit time Δt (that is, interaction time between the moving standing light wave and atoms) for an atom to pass through the first moving standing light wave 200a, 1:1 becomes a ratio between an existence probability of |g> and an existence probability of |e> immediately after passing through the first moving standing light wave 200a. While transiting from |g> to |e> through absorption and emission of two photons traveling against each other, each atom acquires momentum of two photons. Therefore, the moving direction of atoms in a state |e> is deviated from the moving direction of atoms in a state |g>. That is, in the course of the atomic beam 100a passing through the first moving standing light wave 200a, the atomic beam 100a is split into an atomic beam composed of atoms in the state |g> and an atomic beam composed of atoms in the state |e> at a ratio of 1:1. The first moving standing light wave 200a is called a "π/2 pulse" and has a function as an atomic beam splitter.

After the split, the atomic beam composed of atoms in the state |g> and the atomic beam composed of atoms in the state |e> pass through the second moving standing light wave 200b. Here, for example, by setting to 2Δt the transit time for an atom to pass through the second moving standing light wave 200b (that is, an interaction time between the moving standing light wave and atoms), the atomic beam composed of atoms in the state |g> is reversed to the atomic beam composed of atoms in the state |e> in the transit process and the atomic beam composed of atoms in the state |e> is reversed to the atomic beam composed of atoms in the state |g> in the transit process. At this time, in the former, the moving direction of atoms that have transited from |g> to |e> is deviated from the moving direction of atoms in the state |g>. As a result, the propagating direction of the atomic beam composed of atoms in the state |e> after passing through the second moving standing light wave 200b becomes parallel to the propagating direction of the atomic beam composed of atoms in the state |e> after passing through the first moving standing light wave 200a. In the latter, in transition from |e> to |g> through absorption and emission of two photons traveling against each other, each atom loses the same momentum as the momentum obtained from the two photons. That is, the moving direction of atoms after transition from |e> to |g> is deviated from the moving direction of atoms in the state |e> before the transition. As a result, the propagating direction of the atomic beam composed of atoms in the state |g> after passing through the second moving standing light wave 200b becomes parallel to the propagating direction of the atomic beam composed of atoms in the state |g> after passing through the first moving standing light wave 200a. The second moving standing light wave 200b is called a "π pulse" and has a function as a mirror of atomic beams.

After the reversal, the atomic beam composed of atoms in the state |g> and the atomic beam composed of atoms in the state |e> pass through the third moving standing light wave 200c. When the atomic beam 100a from the atomic beam source 100 passes through the first moving standing light wave 200a at t₁=T and the two atomic beams after the split pass through the second moving standing light wave 200b at t₂=T+ΔT, the two atomic beams after the reversal pass through the third moving standing light wave 200c at t₃=T+2ΔT. At time t₃, the atomic beam composed of atoms in the state |g> after the reversal and the atomic beam composed of atoms in the state |e> after the reversal cross each other. Here, by setting appropriately, for example, the transit time for an atom to pass through the third moving standing light wave 200c (that is, an interaction time between the moving standing light wave and atoms), more specifically, by setting the transit time for an atom to pass through the third moving standing light wave 200c to Δt above, it is possible to obtain the atomic beam 100b corresponding to the superposition state of |g> and |e> of individual atoms included in the crossing region between the atomic beam composed of atoms in the state |g> and the atomic beam composed of atoms in the state |e>. This atomic beam 100b is output of the interference device 200. The third moving standing light wave 200c is called a "π/2 pulse" and has a function as an atomic beam combiner.

While angular velocity or acceleration is applied to the Mach-Zehnder type atom interferometer 900, a phase difference is generated between the two paths of the atomic beams after irradiation of the first moving standing light wave 200a until irradiation of the third moving standing light wave 200c, and this phase difference is reflected in the existence probabilities of states |g> and |e> of individual atoms after passing through the third moving standing light wave 200c. Therefore, the monitor 400 detects angular velocity or acceleration by monitoring the atomic beam 100b from the interference device 200. For example, the monitor 400 irradiates the atomic beam 100b from the interference device 200 with probe light 408 and detects fluorescence from atoms in the state |e> using a photodetector 409.

For the aforementioned Mach-Zehnder type atom interferometer using a two-photon Raman process caused by the moving standing light waves, Non-Patent Literature 1 or the like serves as a reference.

### PRIOR ART LITERATURE

### NON-PATENT LITERATURE

Non-patent literature 1: T. L. Gustavson, P. Bouyer and M. A. Kasevich, "Precision Rotation Measurements with an Atom Interferometer Gyroscope," Phys. Rev. Lett.78, 2046-2049, Published 17 March 1997.

### SUMMARY OF THE INVENTION

### PROBLEMS TO BE SOLVED BY THE INVENTION

Conventionally, alkaline metal atoms are mainly used as the atomic species. An alkaline metal atom has one electron at an outermost shell. Therefore, strict magnetic shielding is necessary since an electron spin is affected by an environmental magnetic field.

It is therefore an object of the present invention to provide a Mach-Zehnder type atomic interferometric gyroscope, which is hardly affected by an environmental magnetic field.

### MEANS TO SOLVE THE PROBLEMS

A gyroscope of the present invention is a Mach-Zehnder type atomic interferometric gyroscope, and includes an atomic beam source, a moving standing light wave generating means, an interference means and a monitoring means.

The atomic beam source is suitable to continuously generate an atomic beam in which individual atoms are in the same state. Atoms are alkaline earth metal atoms, alkaline earth-like metal atoms, stable isotopes of alkaline earth metal atoms or stable isotopes of alkaline earth-like metal atoms.

The moving standing light wave generating means is adapted to generate three or more moving standing light waves.

The interference means is adapted to obtain an atomic beam resulting from interaction between the atomic beam and the three or more moving standing light waves.

The monitoring means is adapted to detect angular velocity or acceleration by monitoring the atomic beam from the interference means.

### EFFECTS OF THE INVENTION

The present invention uses atomic beams of alkaline earth metal atoms, alkaline earth-like metal atoms, stable isotopes of alkaline earth metal atoms or stable isotopes of alkaline earth-like metal atoms, and can thereby implement a Mach-Zehnder type atomic interferometric gyroscope which is hardly affected by an environmental magnetic field.

### BRIEF DESCRIPTION OF THE DRAWINGS

Fig. 1 is a diagram for describing a configuration of a conventional gyroscope; and
Fig. 2 is a diagram for describing a configuration of a gyroscope according to an embodiment.

### DETAILED DESCRIPTION OF THE EMBODIMENTS

Embodiments of the present invention will be described with reference to the accompanying drawings. Note that the drawings are provided for an understanding of the embodiments and dimensions of respective illustrated components are not accurate.

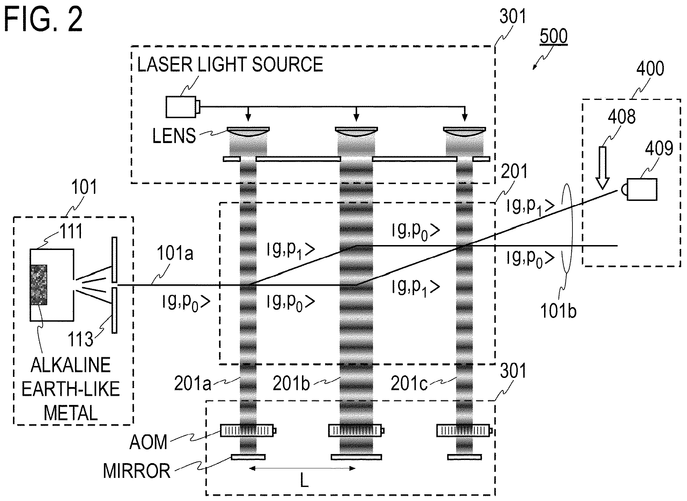

A Mach-Zehnder type atomic interferometric gyroscope according to an embodiment uses not a two-photon Raman process but n-th order (n being a predetermined positive integer of 2 or more) Bragg diffraction. The reason for this will be described later. A gyroscope 500 according to the embodiment shown in Fig. 2 includes an atomic beam source 101, an interference device 201, a moving standing light wave generator 301, and a monitor 400. In this embodiment, the atomic beam source 101, the interference device 201 and the monitor 400 are housed in a vacuum chamber (not shown).

The atomic beam source 101 continuously generates an atomic beam 101a in which individual atoms are in the same state. According to a current technical level, techniques for continuously generating a thermal atomic beam (e.g., up to 100 m/s) or a cold atomic beam (e.g., up to 10 m/s) are known. As has already been described, a thermal atomic beam is generated by causing a high-speed atomic gas obtained by sublimating a high-purity element in an oven 111 to pass through a collimator 113. On the other hand, the cold atomic beam is generated, for example, by causing a high-speed atomic gas to pass through a Zeeman Slower (not shown) or a two-dimensional cooling apparatus. Reference Document 1 should be referred to for a low-speed atomic beam source using the two-dimensional cooling apparatus. The atoms are alkaline earth-like metal atoms (in a broad sense). Here, the term "alkaline earth-like metal atom (in a broad sense)" means those having two electrons at the outermost shell, and includes not only alkaline earth metal atoms (calcium, strontium, barium, radium) but also beryllium, magnesium, ytterbium, and further includes stable isotopes thereof, and is preferably an atom without nuclear spins among these elements. This will be described from another standpoint as follows. Atoms available in the present invention are alkaline earth(-like) metal atoms or stable isotopes of alkaline earth(-like) metal atoms. Here "alkaline earth(-like) metal atoms" include alkaline earth metal atoms (calcium, strontium, barium, radium) and alkaline earth-like metal atoms (in a narrow sense). As with the alkaline earth metal atoms, the alkaline earth-like metal atoms (in a narrow sense) are atoms having an electron configuration without magnetic moment due to electron spin in a ground state, and beryllium, magnesium, ytterbium, cadmium, mercury can be taken as some examples thereof. Among alkaline earth(-like) metal atoms and stable isotopes of alkaline earth(-like) metal atoms, atoms having no nuclear spin are particularly preferable. An alkaline earth(-like) metal atom has two electrons at its outermost shell and so the sum of spin angular momenta of the two electron in antiparallel configuration becomes zero, making it less likely to be affected by an environmental magnetic field, and alkaline earth(-like) metal atoms having no nuclear spin in particular are not affected by the environmental magnetic field at all. (Reference Document 1) J. Schoser et al., "Intense source of cold Rb atoms from a pure two-dimensional magneto-optical trap," Phys. Rev. A 66, 023410 - Published 26 August 2002.

The moving standing light wave generator 301 generates three moving standing light waves (a first moving standing light wave 201a, a second moving standing light wave 201b and a third moving standing light wave 201c) that satisfy n-th order Bragg conditions. Of course, the first moving standing light wave 201a must also meet the requirement of the aforementioned function as a splitter, the second moving standing light wave 201b must also meet the requirement of the aforementioned function as a mirror and the third moving standing light wave 201c must also meet the requirement of the aforementioned function as a combiner.

The three moving standing light waves (first moving standing light wave 201a, the second moving standing light wave 201b and the third moving standing light wave 201c) that satisfy such conditions are respectively implemented by appropriately setting a beam waist of a Gaussian Beam, wavelength, light intensity and further a difference frequency between counter-propagating laser beams. Note that the beam waist of the Gaussian Beam can be optically set (e.g., laser light is condensed with lenses), and light intensity of the Gaussian Beam can be electrically set (e.g., output of the Gaussian Beam is adjusted). That is, generation parameters of the moving standing light waves are different from conventional generation parameters and the configuration of the moving standing light wave generator 301 to generate the three moving standing light waves is not different from the configuration of the conventional moving standing light wave generator 300 (Fig. 1), and therefore description of the configuration of the moving standing light wave generator 301 will be omitted (in Fig. 2, the laser light source, the lens, mirror, the AOM or the like are illustrated schematically).

In the interference device 201, the atomic beam 101a passes through the three moving standing light waves 201a, 201b and 201c. The atom interferometer of the present embodiment uses transition by light irradiation between two different momentum states |g, p₀> and |g, p₁> in the same internal state because atoms have no hyperfine structure.

In the course of the atomic beam 101a from the atomic beam source 101 passing through the first moving standing light wave 201a, the state of individual atoms whose initial state is |g, p₀> changes to an superposition state of |g, p₀> and |g, p₁>. By setting appropriately interaction between the first moving standing light wave 201a and atoms, in other words, by setting appropriately the beam waist, wavelength, light intensity and difference frequency between the counter-propagating laser beams, 1:1 becomes the ratio between the existence probability of |g, p₀> and the existence probability of |g, p₁>immediately after passing through the first moving standing light wave 201a. While transiting from |g, p₀> to |g, p₁> through absorption and emission of 2n photons traveling against each other, each atom acquires momentum of 2n photons (=p₁-p₀). Therefore, the moving direction of atoms in the state |g, p₁> is considerably deviated from the moving direction of atoms in the state |g, p₀>. That is, in the course of the atomic beam passing through the first moving standing light wave 201a, the atomic beam 101a is split into an atomic beam composed of atoms in the state |g, p₀> and an atomic beam composed of atoms in the state |g, p₁> at a ratio of 1:1. The propagating direction of the atomic beam composed of atoms in the state |g, p₁> is a direction based on an n-th order Bragg condition. The angle formed by a direction of 0-th order light (that is, the propagating direction of the atomic beam 101a composed of atoms in the state |g, p₀> not subjected to Bragg diffraction) and a direction based on the n-th order Bragg condition is n times the angle formed by the direction of the 0-th order light and the direction based on the first-order Bragg condition. That is, a spread (in other words, deviation) between the propagating direction of the atomic beam composed of atoms in the state |g, p₀> and the propagating direction of the atomic beam composed of atoms in the state |g, p₁> can be made larger than the conventional one (Fig. 1).

After the split, the atomic beam composed of atoms in the state |g, p₀> and the atomic beam composed of atoms in the state |g, p₁> pass through the second moving standing light wave 201b. Here, by setting appropriately interaction between the second moving standing light wave 201b and atoms, in other words, by setting appropriately the beam waist, wavelength, light intensity and difference frequency between the counter-propagating laser beams, the atomic beam composed of atoms in the state |g, p₀> is reversed to the atomic beam composed of atoms in the state |g, p₁> in the transit process and the atomic beam composed of atoms in the state |g, p₁> is reversed to the atomic beam composed of atoms in the state |g, p₀> in the transit process by passing through the second moving standing light wave 201b. At this time, in the former, the propagating direction of atoms that have transitioned from |g, p₀> to |g, p₁> is deviated from the moving direction of atoms in the state |g, p₀> as described above. As a result, the propagating direction of the atomic beam composed of atoms in the state |g, p₁> after passing through the second moving standing light wave 201b becomes parallel to the propagating direction of the atomic beam composed of atoms in the state |g, p₁> after passing through the first moving standing light wave 201a. In the latter, in transition from |g, p₁> to |g, p₀> through absorption and emission of 2n photons traveling against each other, each atom loses the same momentum as the momentum obtained from the 2n photons. That is, the moving direction of atoms after transition from |g, p₁> to |g, p₀> is deviated from the moving direction of atoms in the state |g, p₁> before the transition. As a result, the propagating direction of the atomic beam composed of atoms in the state |g, p₀> after passing through the second moving standing light wave 201b becomes parallel to the propagating direction of atomic beam composed of atoms in the state |g, p₀> after passing through the first moving standing light wave 201a.

After the reversal, the atomic beam composed of atoms in the state |g, p₀> and the atomic beam composed of atoms in the state |g, p₁> pass through the third moving standing light wave 201c. At this transit period, the atomic beam composed of atoms in the state |g, p₀> after the reversal and the atomic beam composed of atoms in the state |g, p₁> after the reversal cross each other. Here, by setting appropriately interaction between the third moving standing light wave 201c and atoms, in other words, by setting appropriately the beam waist, wavelength, light intensity and difference frequency between the counter-propagating laser beams, it is possible to obtain an atomic beam 101b corresponding to a superposition state of |g, p₀> and |g, p₁> of individual atoms included in the crossing region between the atomic beam composed of atoms in the state |g, p₀> and the atomic beam composed of atoms in the state |g, p₁>. The propagating direction of the atomic beam 101b obtained after passing through the third moving standing light wave 201c is theoretically any one or both of a direction of 0-th order light and a direction based on the n-th order Bragg condition.

While angular velocity or acceleration within a plane including two paths of atomic beams from an action of the first moving standing light wave 201a to an action of the third moving standing light wave 201c are applied to the gyroscope 500, a phase difference is produced in the two paths of the atomic beams from the action of the first moving standing light wave 201a to the action of the third moving standing light wave 201c, and this phase difference is reflected in an existence probabilities of the state |g, p₀> and |g, p₁> of individual atoms after passing through the third moving standing light wave 201c. Therefore, the monitor 400 detects angular velocity or acceleration by monitoring the atomic beam 101b from the interference device 201 (that is, the atomic beam 101b obtained after passing through the third moving standing light wave 201c). For example, the monitor 400 irradiates the atomic beam 101b from the interference device 201 with probe light 408 and detects fluorescence from atoms in the state |g, p₁> using a photodetector 409. Examples of the photodetector 409 include a photomultiplier tube and a fluorescence photodetector. According to the present embodiment, because spatial decomposition improves, in other words, because wide is an interval between the two paths (the atomic beam composed of atoms in the state |g, p₀> and the atomic beam composed of atoms in the state |g, p₁>) after passing through the third moving standing light wave, a CCD image sensor can also be used as the photodetector 409. Alternatively, when a channeltron is used as the photodetector 409, one atomic beam of the two paths after passing through the third moving standing light wave may be ionized by a laser beam or the like instead of the probe light and ions may be detected using the channeltron.

Use of alkaline earth(-like) metal atoms makes it possible to implement a gyroscope which is not only robust to an environmental magnetic field but also provides high accuracy.

In the case of a two-photon Raman process of alkaline metal atoms by moving standing light waves, two light beams (two laser beams generating moving standing light waves) red-detuned from a state |E> which is further higher than the state |e> and atoms interact with each other, and therefore an amount of AC stark shift in the state |g> does not match an amount of AC stark shift in the state |e>. This mismatch appears in the detection result of the gyroscope as noise.

In contrast, in the case of the n-th order Bragg diffraction of alkaline earth(-like) metal atoms by moving standing light waves, no mismatch in an AC stark shift amount occurs since transition between two momentum states in the same internal state of an atom is used. Therefore, no noise is caused by mismatch in the AC stark shift amount and so the gyroscope of the present embodiment has higher accuracy than conventional ones.

### (Reason for using n-th order Bragg diffraction)

In the Mach-Zehnder type atom interferometer using the two-photon Raman process caused by the moving standing light waves, in transition from |g> to |e>, each atom generally acquires momentum of two photons through absorption and emission of two photons traveling against each other. For this reason, although illustrated exaggerated in Fig. 1, the actual interval between the two paths (the atomic beam composed of atoms in the state |g> and the atomic beam composed of atoms in the state |e>) obtained after passing through the first moving standing light wave is quite narrow. More specifically, while the atomic beam from the atomic beam source has a diameter on the order of millimeters, the interval at the position at which the atomic beam passes through the second moving standing light wave is on the order of micrometers.

By the way, phase sensitivity of a gyroscope is known to be proportional to A/v where A is an area enclosed by two paths of the atomic beam and v is an atom speed. For a Mach-Zehnder type atomic interferometric gyroscope using a two-photon Raman process, an increase in the area A and/or a decrease in the speed v is/are effective for improvement of the phase sensitivity. To increase the area A in the configuration shown in Fig. 1, the interval between the first moving standing light wave and the third moving standing light wave may be increased (since momentum that each atom can receive in a two-photon Raman process is generally limited to momentum of two photons, the interval between the two paths cannot be increased). However, such a gyroscope is large and not practical.

In this respect, in the present embodiment, because the angle formed by the direction of the 0-th order light and the direction based on the n-th order Bragg condition is n times the angle formed by the direction of the 0-th order light and the direction based on the first-order Bragg condition, phase sensitivity of the gyroscope 500 of the present embodiment is larger than phase sensitivity of the conventional gyroscope 900 having the same interval as the interval between the first moving standing light wave and the third moving standing light wave in the gyroscope 500. That is, when a comparison is made between the gyroscope 500 of the present embodiment and the conventional gyroscope 900 having the same phase sensitivity, an overall length (length in an emitting direction of the atomic beam) of the gyroscope 500 of the present embodiment is shorter than an overall length of the conventional gyroscope 900.

### <Preferred Embodiment>

Bias stability of the gyroscope improves by improvement of the phase sensitivity of the gyroscope. The phase sensitivity is known to be proportional to A/v, where A is an area enclosed by two paths of the atomic beam and v is an atom speed. That is, in the gyroscope 500 shown in Fig. 2, the phase sensitivity is proportional to L²/v, where a distance from an interaction position between the atomic beam 101a and the first moving standing light wave 201a to an interaction position between the atomic beam 101a and the second moving standing light wave 201b is assumed to be L. L may be reduced to implement a small gyroscope 500, but simply reducing L may cause the phase sensitivity to also decrease. Therefore, in order to prevent the phase sensitivity from decreasing, the atom speed may be reduced. From this standpoint, it is preferable to use a cold atomic beam. By reducing the atom speed to, for example, 1/100 of the thermal atom speed, the size of the gyroscope 500 can be reduced to 1/10 of the original size without the need for changing the phase sensitivity.

In addition, the present invention is not limited to the above-described embodiments, but can be changed as appropriate without departing from the spirit and scope of the present invention.

For example, although n-th order Bragg diffraction of alkaline earth(-like) metal atoms by moving standing light waves is used in the above-described embodiment, a gyroscope robust to an environmental magnetic field can be implemented by using first-order Bragg diffraction of alkaline earth(-like) metal atoms by moving standing light waves.

Furthermore, for example, the above-described embodiment uses Mach-Zehnder type atomic interference that performs one split, one reversal and one combination using three moving standing light waves, but the present invention is not limited to such an embodiment. The present invention can also be implemented as an embodiment using multi-stage Mach-Zehnder type atomic interference that performs two or more splits, two or more reversals and two or more combinations. Reference Document 2 should be referred to for such multi-stage Mach-Zehnder type atomic interference.
(Reference Document 2) Takatoshi Aoki et al., "High-finesse atomic multiple-beam interferometer comprised of copropagating stimulated Raman-pulse fields," Phys. Rev. A63, 063611 (2001) - Published 16 May 2001.

The embodiments of the present invention have been described so far, but the present invention is not limited to these embodiments. Various changes and modifications can be made without departing from the spirit and scope of the present invention. The selected and described embodiments are intended to describe principles and actual applications of the present invention. The present invention is used in various embodiments with various changes or modifications, and various changes or modifications are determined according to the expected application. All such changes and modifications are intended to be included in the scope of the present invention as defined by the appended scope of claims and intended to be given the same protection when interpreted according to the extent given justly, lawfully or fairly.

### DESCRIPTION OF REFERENCE NUMERALS

- 101: atomic beam source
- 101a: atomic beam
- 101b: atomic beam
- 111: oven
- 113: collimator
- 201: interference device
- 201a: first moving standing light wave
- 201b: second moving standing light wave
- 201c: third moving standing light wave
- 301: moving standing light wave generator
- 400: monitor
- 500: gyroscope

## Claims

1. A Mach-Zehnder type atomic interferometric gyroscope comprising:
an atomic beam source for continuously generating an atomic beam, individual atoms in the atomic beam being in a same state;
a moving standing light wave generating means adapted to generate three or more moving standing light waves;
an interference means adapted to obtain an atomic beam resulting from interaction between the atomic beam and the three or more moving standing light waves; and
a monitoring means adapted to detect angular velocity or acceleration by monitoring the atomic beam from the interference means,
the atoms being alkaline earth metal atoms, alkaline earth-like metal atoms, stable isotopes of alkaline earth metal atoms or stable isotopes of alkaline earth-like metal atoms.

2. The gyroscope according to claim 1, wherein the atomic beam source generates a cold atomic beam.

3. The gyroscope according to claim 1 or 2, wherein each of the three or more moving standing light waves satisfies an n-th order Bragg condition where n is a positive integer of 2 or more.
